# EUROPÄISCHE PATENTSCHRIFT

(11) **EP 0 891 806 B1**
(45) Veröffentlichungstag und Bekanntmachung des Hinweises auf die Patenterteilung: **28.07.2004**
(21) Anmeldenummer: 98112703.8
(22) Anmeldetag: 09.07.1998
(51) Int. Cl.: B01D 53/94, F01N 3/08, F01N 3/20

(54) **Verfahren und Vorrichtung zur Regeneration einer Schwefelfalle**
Process and apparatus for regenerating a sulphur-trap
Procédé et dispositif pour régénérer un piège à soufre

(30) Priorität: 19.07.1997 DE 19731131
(43) Veröffentlichungstag der Anmeldung: 20.01.1999
(73) Patentinhaber: Volkswagen Aktiengesellschaft, 38436 Wolfsburg (DE)
(72) Erfinder: Pott, Ekkehard, Dipl.-Ing., 38518 Gifhorn (DE)
(74) Vertreter: Meyer, Enno, Dr.

(56) Entgegenhaltungen:
- EP-A- 0 601 287
- EP-A- 0 625 633
- EP-A- 0 761 286
- WO-A-95/18292
- DE-A- 19 626 837

## Beschreibung

Die Erfindung betrifft ein Verfahren zur Regeneration einer Schwefelfalle, die einem NOx-Speicher zur Abgasreinigung einer Brennkraftmaschine vorgeschaltet ist, wobei ein Bypass zur Umgehung der Schwefelfalle vorgesehen ist, sowie eine Vorrichtung zur Durchführung des Verfahrens.

Bei NOx-Speicherkatalysatoren wird neben der erwünschten Einlagerung von NOx im mageren Abgas auch eine Einlagerung von SOx beobachtet. Die Sulfate entstehen bei der Verbrennung schwefelhaltigen Kraftstoffs und der nachfolgenden Oxidation auf katalytisch wirksamen Oberflächen.

Während die eingelagerten NOx-Bestandteile bereits bei niedrigen Temperaturen ab ca. 150 °C teilweise und spätestens bei 250 °C vollständig bei Abgasdurchströmung mit λ < 1 wieder freigesetzt und in N₂ umgewandelt werden, sind für die Sulfatfreisetzung und - umwandlung wesentlich höhere Temperaturen im Bereich von 500 °C bis > 700 °C erforderlich. Die De-Sulfatierungszeiten sind überdies je nach verwendetem Speichermaterial stark temperaturabhängig. Ohne begleitende Maßnahmen am Kraftstoff (Reduzierung des Schwefelgehaltes) oder am NOx-Speicher (verbesserte Schwefelresistenz) tritt eine schleichende Vergiftung des Speichers ein, die die NOx-Einlagerungsfähigkeit bis auf Null reduzieren kann. Vollkommen schwefelresistente NOx-Speichermaterialien sind derzeit nicht bekannt und eine Kraftstoffmodifizierung ist wegen der raffinerie- und infrastrukturseitigen Probleme auch nicht kurzfristig zu erwarten.

Zur Schonung des NOx-Speichers einer Abgasreinigungsvorrichtung einer Brennkraftmaschine werden daher vorgeschaltete Schwefelfallen eingesetzt, die infolge einer nahezu vollständigen Sulfateinlagerung die Vergiftung des nachgeschalteten NOx-Speichers erheblich verzögern. Die EP 0 690 213 und EP 0 625 633 beschreiben allgemein De-Sulfatierungsverfahren für Schwefelfallen bei Verbrennungsmotoren, insbesondere Umfang und Dauer der Anfettung in Abhängigkeit von der Abgastemperatur und der SOx-Beladung.

Während der De-Sulfatierung wird der nachgeschaltete NOx-Speicher mittels eines Bypasses umgangen.

Während bei Mager- und DI-Ottomotoren die erforderlichen Speicher- und Abgastemperaturen in weiten Bereichen des Motorkennfeldes durch einen Betrieb mit λ ≤ 1 erzielt werden können, ist bei Dieselmotoren und insbesondere bei Aufladungsdieselmotoren wegen des grundsätzlich mageren Betriebs und der hohen Abgasmassenströme ein Erreichen der De-Sulfatierungsbedingungen bzw. -temperaturen üblicherweise nicht möglich. Auch wenn bei vollastnahem Betrieb Abgastemperaturen größer 500 °C erreicht werden, ist wegen des Leistungseinbruchs kein Betrieb mit λ ≤ 1 möglich. Allein durch Änderung der Motorbetriebsweise kann daher keine De-Sulfatierung bei Dieselmotoren sichergestellt werden. Die Bereitstellung der Reduktionsmittel CO, HC und H₂ kann jedoch im Teillastbetrieb weiterhin wie bei der NOx-Speicherregeneration erfolgen.

Ferner sind elektrisch heizbare Katalysatoren (E-Kat) bei Ottomotoren bekannt, die bereits nach wenigen Sekunden bei einer Bestromung von 150A Temperaturen von größer als 800 °C erreichen, falls keine Abgasdurchströmung stattfindet. Mit zunehmendem Abgasmassenstrom wird jedoch die Aufheizung des E-Kats verzögert und die Beharrungstemperatur sinkt.

DE 196 26 837 A1 beschreibt eine Abgasanlage für eine Dieselbrennkraftmaschine mit einem heizbaren NOx-Speicherkatalysator, wobei die Abgasanlage zwei von mit einer Klappe alternativ freigebbaren Abgassträngen aufweist und in mindestens einem Abgasstrang ein NOx-Speicherkatalysator mit einem vorgeschaltetem E-Katalysator angeordnet ist.

Der Erfindung liegt daher die Aufgabe zugrunde, ein Verfahren zur Regeneration einer Schwefelfalle und eine Vorrichtung zur Durchführung des Verfahrens zu schaffen, die eine Regeneration innerhalb kurzer Zeit ermöglichen.

Die Aufgabe wird durch die Verfahren nach Anspruch 1 und Anspruch 2 sowie die Vorrichtung nach Anspruch 9 gelöst. Vorteilhafte Ausgestaltungen der Erfindung sind Gegenstand der Unteransprüche.

Die vorliegende Erfindung betrifft ein Verfahren zur Regeneration einer Schwefelfalle, die einem NOx-Speicher einer Brennkraftmaschine vorgeschaltet ist, wobei die Schwefelfalle unter ersten Betriebsbedingungen Schwefel durch Sulfateinlagerung speichert und aus der unter zweiten Betriebsbedingungen das gespeicherte Sulfat aus der Schwefelfalle entfernt wird, wobei das Verfahren die folgenden Schritte aufweist:
- Umstellen der Betriebsbedingung der Brennkraftmaschine auf einen Betrieb mit λ ≤ 1 zu einem Zeitpunkt A, einer regenerationswürdigen SOx-Beladung der Schwefelfalle (3) ,
- Beaufschlagen der Schwefelfalle (3) mit Heizstrom im relativ zu A späteren Zeitpunkt B, in dem ein λ -Wert < 1 gemessen wird, oder kurz danach (Zeitpunkt C),
- Leiten des Abgases um die Schwefelfalle herum ab einem Zeitpunkt D, der kurz nach dem Zeitpunkt C liegt oder mit diesem identisch ist,
- Leiten des Abgases durch die Schwefelfalle (3) ab einem Zeitpunkt F, in dem die De-Sulfatierungstemperatur um einen vorbestimmten Betrag überschritten ist,
- Beibehalten des Überschreitens der De-Sulfatierungsmindesttemperatur bis zu einem relativ zu F späteren Zeitpunkt H, in dem die Schwefelfalle (3) sicher desulfatiert ist;
- Abschalten des Heizstroms im Zeitpunkt H;
- Umschalten des Motorbetriebs auf normale Betriebsbedingungen zu einem relativ zu H späteren Zeitpunkt K, zu dem sich die schwefelhaltige Abgassäule nicht mehr im NOx-Speicher befindet.

Ferner betrifft die vorliegende Erfindung ein Verfahren zur Regeneration einer Schwefelfalle, bei der eine thermische De-Sulfatierung unterhalb einer De-Sulfatierungsmindesttemperatur ausgeschlossen ist, die einem NOx-Speicher einer Brennkraftmaschine vorgeschaltet ist, wobei die Schwefelfalle unter ersten Betriebsbedingungen Schwefel durch Sulfateinlagerung speichert und aus der unter zweiten Betriebsbedingungen das gespeicherte Sulfat aus der Schwefelfalle entfernt wird, wobei das Verfahren die folgenden Schritte aufweist:
- Beaufschlagen der Schwefelfalle mit Heizstrom in einem Zeitpunkt C, einer regenerationswürdigen SOx-Beladung der Schwefelfalle .
- Leiten des Abgases um die Schwefelfalle herum ab einem Zeitpunkt D, der kurz nach dem Zeitpunkt C liegt oder mit diesem identisch ist,
- Umstellen der Betriebsbedingung der Brennkraftmaschine auf einen Betrieb mit λ ≤ 1 zu einem Zeitpunkt A nach dem Zeitpunkt D,
- Leiten des Abgases durch die Schwefelfalle ab einem Zeitpunkt F, in dem die De-Sulfatierungstemperatur um einen vorbestimmten Betrag überschritten ist,
- Beibehalten des Überschreitens der De-Sulfatierungsmindesttemperatur bis zu einem relativ zu F späteren Zeitpunkt H, in dem die Schwefelfalle sicher desulfatiert ist,
- Abschalten des Heizstroms im Zeitpunkt H,
- Umschalten des Motorbetriebs auf normale Betriebsbedingungen zu einem relativ zu H späteren Zeitpunkt K, zu dem sich die schwefelhaltige Abgassäule nicht mehr im NOx-Speicher befindet.

Durch das Umleiten des Abgasstroms um die Schwefelfalle herum wird sowohl bei Otto- als auch bei Dieselmotoren ein schnelles elektrisches Aufheizen der Schwefelfalle erzielt. Bedingt durch die Abkühlung der Schwefelfalle beim erneuten Durchleiten des Abgasstroms durch die Schwefelfalle wird die weitere elektrische Aufheizung der Schwefelfalle verhindert und eine geringere Beharrungstemperatur unterhalb der maximal zulässigen Temperatur, aber oberhalb der notwendigen De-Sulfatierungstemperatur, erreicht.

Vorzugsweise wird der λ-Wert auf einen Wert von 0,6 bis 0,999, vorzugsweise 0,8, gedrosselt und der Heizstrom beträgt 50 bis 250 A, vorzugsweise 100 A.

Vorzugsweise beträgt die Desulfatierungsmindesttemperatur 500 bis 750 °C, vorzugsweise 650 °C.

Vorzugsweise wird bei einem stöchiometrischen Reduktionsmittelbedarf von 4 Mol CO pro Mol SO₄ ein Sicherheitszuschlag bei der Desulfatierung von 0 bis 300 %, insbesondere 30 %, zugeschlagen.

Vorzugsweise werden für den Zeitraum A bis K der Desulfatierung 8 bis 60 Sekunden, vorzugsweise 15 - 30 Sekunden, benötigt.

Ferner betrifft die vorliegende Erfindung eine Vorrichtung zum Reinigen von Abgasen einer Brennkraftmaschine, die in Mager-/Fett-Betriebszuständen gefahren werden kann, mit einem NOx-Speicher und einer vorgeschalteten Schwefelfalle, wobei die Schwefelfalle elektrisch heizbar ist, wobei die Vorrichtung einen konzentrisch in der Schwefelfalle angeordneten Bypass aufweist. Dabei kann der Bypass mit einer steuerbaren Klappe geöffnet und geschlossen werden.

Durch die konzentrische Anordnung der Klappe bzw. des Bypass innerhalb der Schwefelfalle ergibt sich ein deutlich geringerer Platzbedarf und wesentlich geringere Kosten, wobei die Klappe im Normalbetrieb geschlossen und der gesamte Abgasstrom durch die Schwefelfalle strömt, während bei geöffneter Klappe während des Beginns der De-Sulfatierungsphase der Hauptabgasstrom wegen des geringeren Gegendrucks der Klappe durch den axial verlaufenden Kanal strömt. Durch die elektrische Heizung der Schwefelfalle kann so die De-Sulfatierungstemperatur äußerst schnell erreicht werden.

Eine bevorzugte Ausgestaltung der Erfindung wird nachfolgend anhand der Zeichnungen näher beschrieben, in denen:
- Fig. 1: eine schematische Darstellung des Systems bestehen aus der Brennkraftmaschine mit nachgeschaltetem Katalysator zeigt,
- Fig. 2: einen ersten Regenerationsablauf der Schwefelfalle zeigt, und
- Fig. 3: einen zweiten Regenerationsablauf der Schwefelfalle zeigt.

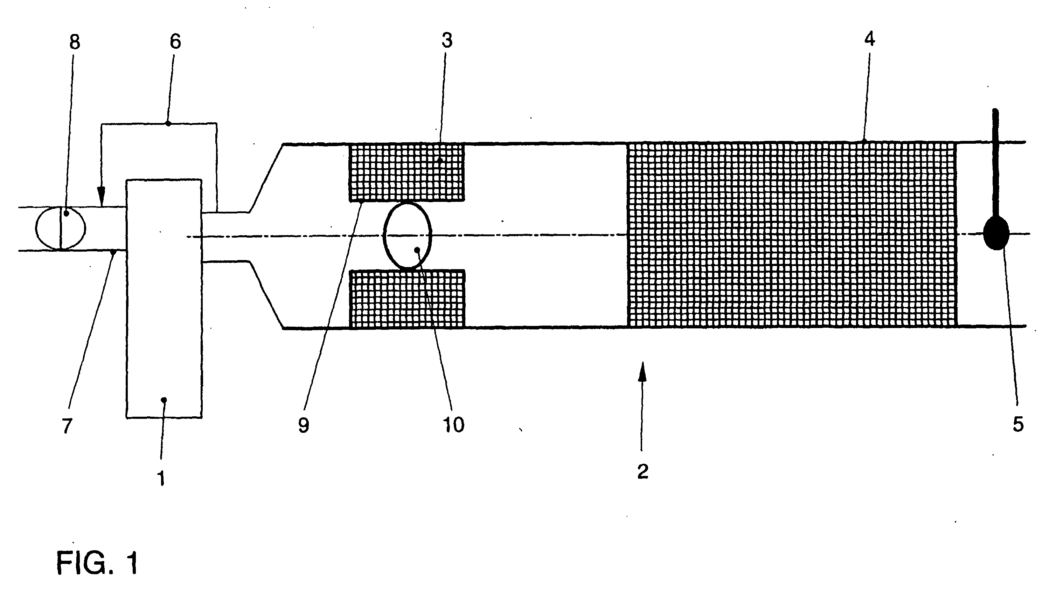

Fig. 1 zeigt einen mit einem Katalysator 2 versehenen Motor 1, wobei der Katalysator 2 in Abgasflußrichtung hintereinander angeordnet eine SOx-Falle 3 und einen NOx-Speicher 4 aufweist. Dem NOx-Speicher 4 nachfolgend angeordnet ist eine Lambda-Sonde 5. Die Abgase des Motors werden über eine Abgasrückführleitung 6 in den Lufteinlaß 7 des Motors rückgekoppelt, in dem sich auch die Saugluftdrossel 8 befindet. Die SOx-Falle 3 weist einen axialen Durchlaß 9 oder Bypass 9 auf, der axialsymmetrisch in dem Katalysator 2 angeordnet ist, wobei der axiale Durchlaß 9 der SOx-Falle 3 eine konzentrische Klappe 10 umfaßt, mit der der axiale Durchlaß 9 geöffnet bzw. verschlossen werden kann. Im Falle einer zylinderförmigen SOx-Falle 3 ist der Durchlaß 9 konzentrisch angeordnet, was ebenfalls auf die Klappe 10 zutrifft. Die konzentrische Klappe 10 ist elektronisch beispielsweise über einen Stellmotor (nicht dargestellt) verstellbar. Bevorzugte Maße der SOx-Falle bei einem 1,9 Liter Turbo-Diesel-Motor sind beispielsweise: Innendurchmesser der SOx-Klappe 55 mm (40 bis 70 mm); Außendurchmesser der SOx-Falle 140 mm (100 bis 150 mm), Länge der SOx-Falle 75 mm (50 bis 150 mm), maximale Aufheiztemperatur 800 °C (600 bis 900 °C), De-Sulfatierungs-Mindesttemperatur 650 °C (500 bis 700 °C).

Bei der De-Sulfatierung dürfte wegen der HC- und H₂-Emissionen mit der Bildung geruchsintensiver Schwefelwasserstoffverbindungen zu rechnen sein. Hier könnte ein dem ganzen System nachgeschalteter Oxidationskatalysator (nicht dargestellt) mit O₂-Speicherkomponenten wirksam werden, oder der NOx-Speicher 4 wird als Dreizonenkatalysator ausgelegt, wie dies in der deutschen Anmeldung DE-196 40 161 beschrieben ist. Die letzte Zone wird in diesem Fall aus stark sauerstoffspeichernden Washcoat und Platinbeschichtung aufgebaut. In diesem Falle muß die Lambdasonde 5 jedoch vor dem NOx-Speicher 4 angeordnet werden, wobei ihr Signal um die Abgaslaufzeit durch den NOx-Speicher 4 korrigiert werden muß, wobei die Abgaslaufzeit zusätzlich mit einem Sicherheitszuschlag versehen wird.

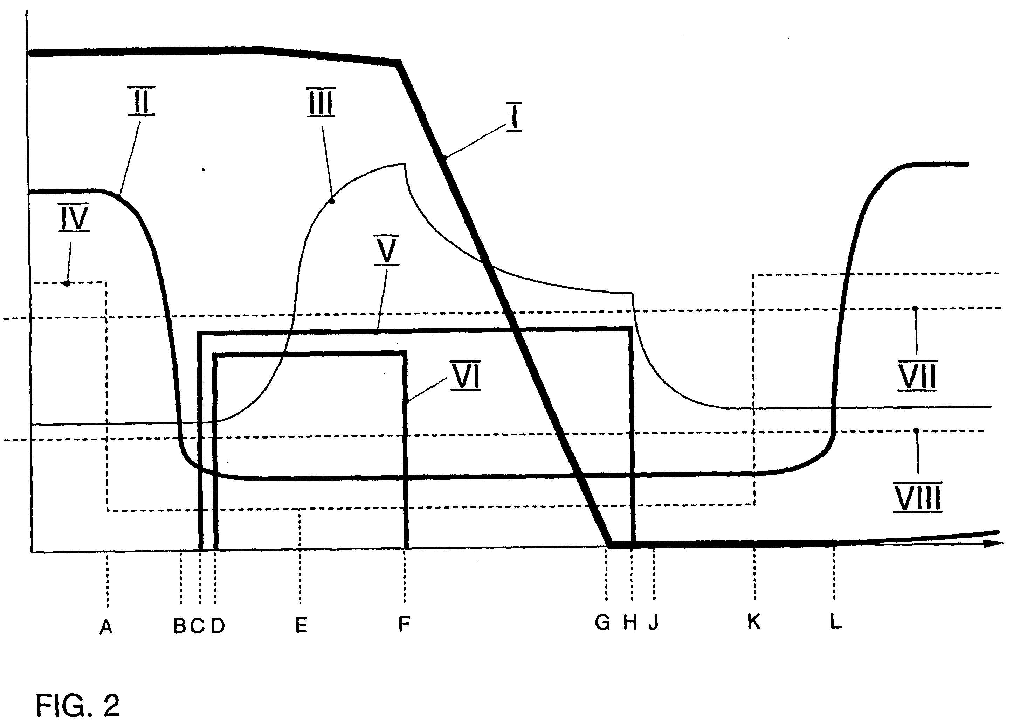

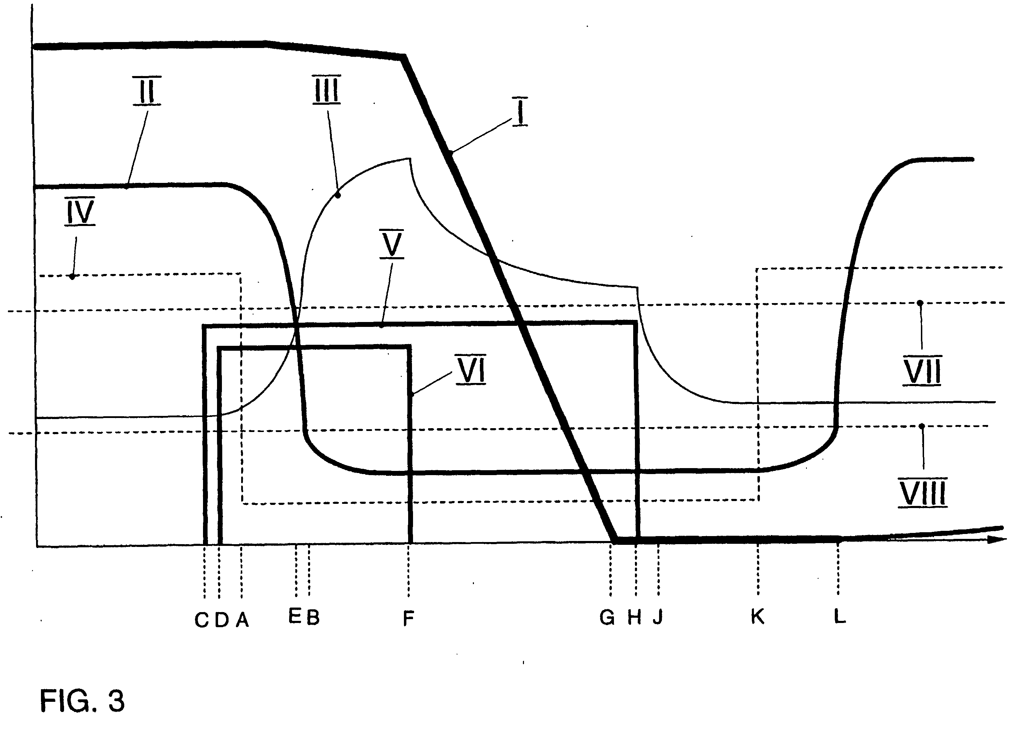

Fig. 2 beschreibt den gesamten De-Sulfatierungsablauf, wobei eine NOx-Speicherentladung in diesem Ablauf mit integriert ist. Dargestellt ist das Verhalten wesentlicher Betriebsparameter in relativen Einheiten gegenüber der Zeit t. So zeigt Kurve I das zeitliche Verhalten der SOx-Beladung, Kurve II das zeitliche Verhalten von λ gemessen nach dem NOx-Speicher 4, Kurve III den Temperaturverlauf in der SOx-Falle 3, Kurve IV die Stellung der Saugluftdrossel 8, wobei der höhere Wert der Stellung "auf" entspricht, während der niedrigere Wert der Stellung "zu" entspricht. Kurve V gibt den zeitlichen Verlauf des Heizstroms wieder und Kurve VI die Stellung der Bypass-Klappe 10 der SOx-Falle 3, wobei der höhere Wert der Stellung "auf" und der niedere Wert der Stellung "zu" entspricht. Die Konstante VII soll die De-Sulfatierungstemperatur darstellen und die Konstante VIII den λ-Wert Eins. Die obigen Definitionen gelten in Fig. 3 analog.

Vor dem Zeitpunkt A wird eine regenerationswürdige SOx-Beladung (Kurve I) der Schwefelfalle 3 erkannt, vorzugsweise beispielsweise immer dann, wenn der akkumulierte Kraftstoffverbrauch seit der letzten De-Sulfatierung einen bestimmten Wert überschritten hat. Andere Verfahren zur Erkennung der Notwendigkeit einer Regeneration der Schwefelfalle sind jedoch möglich: Wenn motor- und temperaturseitig günstige Randbedingungen für eine Regeneration vorliegen (Motorlast ≤ Teillast; Drehzahl > Leerläuf; Temperatur_{abgas} > ca. 200 °C) wird zum Zeitpunkt A die Saugluftdrossel 8 (Kurve IV) weitgehend geschlossen und die Kraftstoffeinspritzmenge so erhöht, daß ein Betrieb mit λ ≤ 1 erfolgt. Nach kurzer, lauflängenbedingter Totzeit wird ab dem Zeitpunkt B bei der nach dem NOx-Speicher 4 angeordneten Lambdasonde 9 ein λ-Wert < 1 (Kurve II) gemessen, so daß sowohl in der Schwefelfalle 3 als auch im NOx-Speicher 4 fettes Abgas vorliegt. Nach Verstreichen eines weiteren kurzen Zeitabschnitts (der auch Null betragen kann), wird zum Zeitpunkt C die elektrisch beheizbare Schwefelfalle 3 mit Strom (Kurve V) beaufschlagt. Etwa im selben Moment (Zeitpunkt D) wird die konzentrische Klappe 10 (Kurve VI) geöffnet, so daß nur noch ein geringer Abgas-Reststrom durch die Schwefelfalle 3 fließt. Es kommt zu einer schnellen Aufheizung mit Überschreiten der De-Sulfatierungs-Mindesttemperatur (Kurve VII) im Zeitpunkt (E). Bereits in diesem Moment tritt eine De-Sulfatierung ein, und zwar abhängig von der Durchströmung mit Abgas. Sobald die De-Sulfatierungs-Mindesttemperatur um einen bestimmten Betrag überschritten wird, wird die konzentrische Klappe 10 des Bypass9 wieder geschlossen und der gesamte CO-reiche Abgasstrom strömt durch die Schwefelfalle 3. Die unvermeidliche Auskühlung wird dabei durch die weitere Bestromung verzögert. Zum Zeitpunkt G kann bei stöchiometrischer Reaktion zwischen dem Sulfat und dem Reduktionsmittel CO von einer vollständigen De-Sulfatierung ausgegangen werden. Analog zu der Regeneration des NOx-Speichers 4 wird ein gewisser Sicherheitszuschlag des Reduktionsmittelangebots durch eine Verlängerung der De-Sulfatisierungszeit bis zum Zeitpunkt H empfohlen. Die Dimensionierung der Schwefelfalle 3, der konzentrischen Klappe 10 und der Stromaufnahme ist so auszulegen, daß die De-Sulfatierungs-Mindestemperatur zwischen den Zeitpunkten F und H keinesfalls unterschritten wird. Zum Zeitpunkt H wird der Strom abgeschaltet und die Schwefelfalle 3 kühlt sehr schnell bis unter die De-Sulfatierungs-Mindestemperatur im Zeitpunkt J aus. Damit sich die freigesetzten Sulfate nicht im nachgeschalteten NOx-Speicher 4 ablagern, wird der Betriebszustand des Motors 1 so lange weiter fettgehalten, bis sich die schwefelhaltige Abgassäule nicht mehr im NOx-Speicher 4 befindet und dort bei magerer Umgebung eingelagert werden könnte (Zeitpunkt K). Zum Zeitpunkt K kann dann gefahrlos der normale Motorbetrieb (Mager-Fett-Betrieb) wieder aufgenommen werden. Zum Zeitpunkt L ist das gesamte Abgas daher wieder mager und die SOx-Einlagerung kann wieder von neuem beginnen (ansteigende Kurve I).

Die gerade beschriebene Betriebsstrategie gilt für SOx-Speichermaterialien, bei denen infolge einer möglichen thermischen De-Sulfatierung bereits während der Aufheizphase fette Umgebungsbedingungen herrschen müssen.

Fig. 3 zeigt einen De-Sulfatierungsablauf für SOx-Speichermaterialien, bei denen eine thermische De-Sulfatierung unterhalb der De-Sulfatierungs-Mindestemperatur sicher ausgeschlossen werden kann. Die Bezeichnung der Kurven wurde im Zusammenhang mit Fig. 2 bereits definiert. In diesem Fall ist eine Aufheizung der Schwefelfalle 3 zumindest teilweise im mageren Abgas möglich, d.h. die Saugluftdrossel 8 wird erst dann geschlossen, wenn die Schwefelfalle 3 bereits elektrisch geheizt wird. Fettes Abgas nach dem NOx-Speicher 4 (Zeitpunkt B) muß jedoch spätestens beim Überschreiten der De-Sulfatierungs-Mindesttemperatur im SOx-Speicher 3 (Zeitpunkt E) vorliegen. Die Zeitdauer der Motordrosselung (A - K) dürfte sich in diesem Fall um ca. 20 % (2 % bis 60 %) verkürzen.

### BEZUGSZEICHENLISTE

- 1 -: Motor
- 2 -: Katalysator
- 3 -: SOx-Falle
- 4 -: NOx-Speicher
- 5 -: λ-Sonde
- 6 -: Abgasrückführleitung
- 7 -: Lufteinlaß
- 8 -: Saugluftdrossel
- 9 -: axialer Durchfluß
- 10 -: konzentrische Klappe
- I -: SOx-Beladung
- II -: λ nach NOx-Speicher
- III -: Temperatur der SOx-Falle
- IV -: Saugluftdrosselstellung
- V -: Stromverlauf
- VI -: Stellung konzentrische Klappe
- VII -: De-Sulfatierungsmindesttemperatur
- VIII -: λ = 1

## Patentansprüche

1. Verfahren zur Regeneration einer Schwefelfalle (3), die einem NOx-Speicher (4) einer Brennkraftmaschine (1) vorgeschaltet ist, wobei die Schwefelfalle (3) unter ersten Betriebsbedingungen Schwefel durch Sulfateinlagerung speichert und aus der unter zweiten Betriebsbedingungen das gespeicherte Sulfat aus der Schwefelfalle (3) entfernt wird, **dadurch gekennzeichnet, daß** das Verfahren die folgenden Schritte aufweist:
- Umstellen der Betriebsbedingung der Brennkraftmaschine auf einen Betrieb mit λ ≤ 1,1, insbesondere λ ≤ 1, zu einem Zeitpunkt A einer regenerationswürdigen SOx-Beladung der Schwefelfalle (3) ,
- Beaufschlagen der Schwefelfalle (3) mit Heizstrom im relativ zu A späteren Zeitpunkt B, in dem ein λ-Wert < 1,1 erreicht ist, oder kurz danach (Zeitpunkt C),
- Leiten des Abgases um die Schwefelfalle herum ab einem Zeitpunkt D, der insbesondere kurz nach dem Zeitpunkt C liegt oder mit diesem identisch ist,
- Leiten des Abgases durch die Schwefelfalle (3) ab einem Zeitpunkt F, in dem die De-Sulfatierungstemperatur erreicht oder um einen insbesondere vorbestimmten Betrag überschritten ist,
- Beibehalten des Überschreitens der De-Sulfatierungsmindesttemperatur bis zu einem relativ zu F späteren Zeitpunkt H, in dem die Schwefelfalle (3) desulfatiert ist;
- Abschalten des Heizstroms im Zeitpunkt H;
- Umschalten des Motorbetriebs auf normale Betriebsbedingungen zu einem Zeitpunkt K, der insbesondere später ist als der Zeitpunkt H und zu dem sich die schwefelhaltige Abgassäule insbesondere nicht mehr im NOx-Speicher (4) befindet.

2. Verfahren zur Regeneration einer Schwefelfalle (3), bei der eine thermische De-Sulfatierung unterhalb einer De-Sulfatierungsmindesttemperatur ausgeschlossen ist, die einem NOx-Speicher (4) einer Brennkraftmaschine (1) vorgeschaltet ist, wobei die Schwefelfalle (3) unter ersten Betriebsbedingungen Schwefel durch Sulfateinlagerung speichert und aus der unter zweiten Betriebsbedingungen das gespeicherte Sulfat aus der Schwefelfalle (3) entfernt wird, **dadurch gekennzeichnet, daß** das Verfahren die folgenden Schritte aufweist:
- Beaufschlagen der Schwefelfalle (3) mit Heizstrom in einem Zeitpunkt C, einer regenerationswürdigen SOx-Beladung der Schwefelfalle (3),
- Leiten des Abgases um die Schwefelfalle herum ab einem Zeitpunkt D, der kurz nach dem Zeitpunkt C liegt oder mit diesem identisch ist,
- Umstellen der Betriebsbedingung der Brennkraftmaschine auf einen Betrieb mit λ ≤ 1,1, insbesondere λ ≤ 1, zu einem Zeitpunkt A nach dem Zeitpunkt D,
- Leiten des Abgases durch die Schwefelfalle (3) ab einem Zeitpunkt F, in dem die De-Sulfatierungstemperatur erreicht oder um einen insbesondere vorbestimmten Betrag überschritten ist,
- Beibehalten des Überschreitens der De-Sulfatierungsmindesttemperatur bis zu einem relativ zu F späteren Zeitpunkt H, in dem die Schwefelfalle (3) desulfatiert ist;
- Abschalten des Heizstroms im Zeitpunkt H;
- Umschalten des Motorbetriebs auf normale Betriebsbedingungen zu einem Zeitpunkt K, der insbesondere später ist als der Zeitpunkt H und zu dem sich die schwefelhaltige Abgassäule insbesondere nicht mehr im NOx-Speicher (4) befindet.

3. Verfahren nach Anspruch 1, **dadurch gekennzeichnet, daß** die Einstellung der Betriebsbedingungen auf λ ≤ 1 durch Schließen einer Saugluftdrossel (8) und/oder Erhöhen der Kraftstoffeinspritzmenge und/oder Anpassung der EGR-Rate erfolgt.

4. Verfahren nach einem der vorangegangenen Ansprüche, **dadurch gekennzeichnet, daß** der λ-Wert auf einen Wert von 0,6 bis 0,999, vorzugsweise 0,75 - 0,85, gedrosselt wird.

5. Verfahren nach einem der vorangegangenen Ansprüche, **dadurch gekennzeichnet, daß** der Heizstrom 50 bis 250 A, vorzugsweise 100 A, beträgt.

6. Verfahren nach einem der vorangegangenen Ansprüche, **dadurch gekennzeichnet, daß** die Desulfatierungsmindesttemperatur 500 bis 750 °C, vorzugsweise 650 °C beträgt.

7. Verfahren nach einem der vorangegangenen Ansprüche, **dadurch gekennzeichnet, daß** bei einem stöchiometrischen Reduktionsmittelbedarf von 4 Mol CO pro Mol SO₄ ein Sicherheitszuschlag bei der Desulfatierung von 0 bis 300 %, vorzugsweise 30 %, zugeschlagen wird.

8. Verfahren nach einem der vorangegangenen Ansprüche, **dadurch gekennzeichnet, daß** für den Zeitraum A bis K der Desulfatierung 8 bis 60 Sekunden, vorzugsweise 15 - 30 Sekunden, benötigt werden.

9. Vorrichtung zum Reinigen von Abgasen einer Brennkraftmaschine (1), die in Mager /Fett-Betriebszuständen gefahren werden kann, mit einem NOx-Speicher (4) und einer vorgeschalteten Schwefelfalle (3), wobei zur Regeneration der Schwefelfalle (3) diese elektrisch heizbar ist, **dadurch gekennzeichnet, daß** die Vorrichtung einen Bypass zum Umgehen der Schwefelfalle (3) aufweist, wobei der Bypass konzentrisch in der zylinderförmigen Schwefelfalle (3) angeordnet ist.

10. Vorrichtung nach Anspruch 9, **dadurch gekennzeichnet, daß** der Bypass als Rohr (9) ausgelegt ist.

11. Vorrichtung nach Anspruch 9 oder 10, **dadurch gekennzeichnet, daß** innerhalb des konzentrischen Bypass (9) eine steuerbare Klappe (10) zum Öffnen und Verschließen des Bypass (9) angeordnet ist.

12. Vorrichtung nach einem der Ansprüche 9 bis 11, **dadurch gekennzeichnet, daß** eine Abgasrückführung (6) Abgas von der stromabwärtigen Seite der Brennkraftmaschine (1) in den Lufteinlaß (7) zurückführt.

## Claims

1. Method for regenerating a sulphur trap (3) which is connected upstream of an NOₓ store (4) of an internal combustion engine (1), in which the sulphur trap (3), under first operating conditions, stores sulphur by accumulating sulphate and from which, under second operating conditions, the stored sulphate from the sulphur trap (3) is removed, **characterized in that** the method includes the following steps:
- resetting the operating conditions of the internal combustion engine to operation with λ ≤ 1.1, in particular λ ≤ 1, at an instant A when the SOₓ loading of the sulphur trap (3) is suitable for regeneration,
- applying heating current to the sulphur trap (3) at instant B, which is later than A and at which a λ value < 1.1 is reached, or shortly afterwards (instant C),
- bypassing the exhaust gas around the sulphur trap from an instant D, which is in particular shortly after instant C or is identical to the latter,
- passing the exhaust gas through the sulphur trap (3) from an instant F at which the desulphating temperature is reached or exceeded by an in particular predetermined amount,
- maintaining the temperature above the minimum desulphating temperature until an instant H which is later than F and at which the sulphur trap (3) has been desulphated,
- switching off the heating current at instant H;
- switching over engine operation to normal operating conditions at an instant K which is in particular later than instant H and at which the sulphur-containing exhaust-gas column is in particular no longer present in the NOₓ store (4).

2. Method for regenerating a sulphur trap (3), in which thermal desulphating is ruled out below a minimum desulphating temperature, the said sulphur trap being connected upstream of an NOₓ store (4) of an internal combustion engine (1), the sulphur trap (3), under first operating conditions, storing sulphur by accumulating sulphate, and from which, under second operating conditions, the stored sulphate from the sulphur trap (3) is removed, **characterized in that** the method includes the following steps:
- applying heating current to the sulphur trap (3) at an instant C when the SOₓ loading of the sulphur trap (3) is suitable for regeneration,
- bypassing the exhaust gas around the sulphur trap from an instant D which is shortly after instant C or is identical to the latter,
- resetting the operating conditions of the internal combustion engine to operation with λ ≤ 1.1, in particular λ ≤ 1, at an instant A which follows instant D,
- passing the exhaust gas through the sulphur trap (3) from an instant F at which the desulphating temperature is reached or exceeded by an in particular predetermined amount,
- maintaining the temperature above the minimum desulphating temperature until an instant H which is later than F and at which the sulphur trap (3) has been desulphated,
- switching off the heating current at instant H;
- switching over engine operation to normal operating conditions at an instant K which is in particular later than instant H and at which the sulphur-containing exhaust-gas column is in particular no longer present in the NOₓ store (4).

3. Method according to Claim 1, **characterized in that** the operating conditions are set to λ ≤ 1 by closing an intake air throttle (8) and/or increasing the fuel injection quantity and/or adapting the EGR rate.

4. Method according to one of the preceding claims, **characterized in that** the λ value is throttled to a value of from 0.6 to 0.999, preferably 0.75 - 0.85.

5. Method according to one of the preceding claims, **characterized in that** the heating current is 50 to 250 A, preferably 100 A.

6. Method according to one of the preceding claims, **characterized in that** the minimum desulphating temperature is 500 to 750°C, preferably 650°C.

7. Method according to one of the preceding claims, **characterized in that**, at a stoichiometric reducing agent demand of 4 mol of CO per mole of SO₄, an additional safety margin of from 0 to 300%, preferably 30%, is added during the desulphating.

8. Method according to one of the preceding claims, **characterized in that** 8 to 60 seconds, preferably 15-30 seconds are required for the period A to K of the desulphating.

9. Apparatus for purifying exhaust gases from an internal combustion engine (1) which can be operated in lean/rich operating states, having an NOₓ store (4) and an upstream sulphur trap (3), in which the sulphur trap (3) can be heated electrically in order to be regenerated, **characterized in that** the apparatus has a bypass allowing the sulphur trap (3) to be bypassed, the bypass being arranged concentrically in the cylindrical sulphur trap (3).

10. Apparatus according to Claim 9, **characterized in that** the bypass is designed as a tube (9).

11. Apparatus according to Claim 9 or 10, **characterized in that** a controllable flap (10) for opening and closing the bypass (9) is arranged inside the concentric bypass (9).

12. Apparatus according to one of Claims 9 to 11, **characterized in that** an exhaust gas recirculation (6) recirculates exhaust gas from the downstream side of the internal combustion engine (1) into the air intake (7).

## Revendications

1. Procédé pour régénérer un piège à soufre (3), qui est monté en amont d'un accumulateur de NOx (4) d'un moteur à combustion interne (1), le piège à soufre (3), dans des premières conditions de service, accumulant du soufre par dépôt de sulfate et, dans des secondes conditions de service, le sulfate accumulé étant évacué du piège à soufre (3), **caractérisé en ce que** le procédé comporte les étapes suivantes :
- passage de la condition de service du moteur à combustion interne à un fonctionnement avec λ ≤ 1,1, notamment λ ≤ 1, à un instant A où la charge de SOx du piège à soufre (3) est telle qu'une régénération est nécessaire,
- sollicitation du piège à soufre (3) avec un courant de chauffage à l'instant B, ultérieur par rapport à A, où une valeur λ < 1,1 est atteinte, ou peu après (instant C),
- guidage des gaz d'échappement autour du piège à soufre à un instant D qui se situe notamment peu après l'instant C ou est identique à ce dernier,
- guidage des gaz d'échappement à travers le piège à soufre (3) à l'instant F où la température de désulfatation est atteinte ou est dépassée d'un montant notamment prédéfini,
- conservation du dépassement de la température minimale de désulfatation jusqu'à un instant H, ultérieur par rapport à F, où le piège à soufre (3) est désulfaté ;
- désactivation du courant de chauffage à l'instant H ;
- passage du fonctionnement du moteur à des conditions normales de service à un instant K qui est notamment ultérieur à l'instant H et où la colonne de gaz d'échappement contenant du soufre ne se trouve notamment plus dans l'accumulateur de NOx (4).

2. Procédé pour régénérer un piège à soufre (3), où une désulfatation thermique est exclue en dessous d'une température minimale de désulfatation, le piège à soufre étant monté en amont d'un accumulateur de NOx (4) d'un moteur à combustion interne (1), le piège à soufre (3), dans des premières conditions de service, accumulant du soufre par dépôt de sulfate et, dans des secondes conditions de service, le sulfate accumulé étant évacué du piège à soufre (3), **caractérisé en ce que** le procédé comporte les étapes suivantes :
- sollicitation du piège à soufre (3) avec du courant de chauffage à un instant C où la charge de SOx du piège à soufre (3) est telle qu'une régénération est nécessaire,
- guidage des gaz d'échappement autour du piège à soufre à un instant D qui se situe peu après l'instant C ou est identique à ce dernier,
- passage de la condition de service du moteur à combustion interne à un fonctionnement avec λ ≤ 1,1, notamment λ ≤ 1, à un instant A situé après l'instant D,
- guidage des gaz d'échappement à travers le piège à soufre (3) à un instant F où la température de désulfatation est atteinte ou est dépassée d'un montant notamment prédéterminé,
- conservation du dépassement de la température minimale de désulfatation jusqu'à un instant H, ultérieur par rapport à F, où le piège à soufre (3) est désulfaté ;
- désactivation du courant de chauffage à l'instant H ;
- passage du fonctionnement du moteur à des conditions normales de service à un instant K qui est notamment ultérieur à l'instant H et où la colonne de gaz d'échappement contenant du soufre ne se trouve notamment plus dans l'accumulateur de NOx (4).

3. Procédé selon la revendication 1, **caractérisé en ce que** le réglage des conditions de service à λ ≤ 1 s'effectue par la fermeture d'un étranglement (8) d'air d'aspiration et/ou par l'augmentation de la quantité injectée de carburant et/ou par l'adaptation du taux de recirculation des gaz d'échappement (RGE).

4. Procédé selon l'une quelconque des revendications précédentes, **caractérisé en ce que** la valeur λ est étranglée à une valeur de 0,6 à 0,999, de préférence de 0,75 à 0,85.

5. Procédé selon l'une quelconque des revendications précédentes, **caractérisé en ce que** le courant de chauffage est de 50 à 250 A, de préférence 100 A.

6. Procédé selon l'une quelconque des revendications précédentes, **caractérisé en ce que** la température minimale de désulfatation est de 500 à 750°C, de préférence 650°C.

7. Procédé selon l'une quelconque des revendications précédentes, **caractérisé en ce que**, en cas d'un besoin stoechiométrique d'agent réducteur de 4 moles de CO par mole de SO₄, on ajoute lors de la désulfatation un supplément de sécurité de 0 à 300%, de préférence de 30%.

8. Procédé selon l'une quelconque des revendications précédentes, **caractérisé en ce que**, pour la période A à K de la désulfatation, on a besoin de 8 à 60 secondes, de préférence de 15 à 30 secondes.

9. Dispositif pour purifier les gaz d'échappement d'un moteur à combustion interne (1) qui peut être exploité dans des états de service à fonctionnement maigre ou gras, avec un accumulateur de NOx (4) précédé d'un piège à soufre (3), le piège à soufre (3) pouvant être chauffé électriquement afin de le régénérer, **caractérisé en ce que** le dispositif présente une dérivation pour contourner le piège à soufre (3), la dérivation étant disposée concentriquement dans le piège à soufre cylindrique (3).

10. Dispositif selon la revendication 9, **caractérisé en ce que** la dérivation est réalisée sous forme de tube (9).

11. Dispositif selon la revendication 9 ou 10, **caractérisé en ce qu'**un clapet asservissable (10) est disposé à l'intérieur de la dérivation concentrique (9) pour ouvrir et fermer la dérivation (9).

12. Dispositif selon l'une quelconque des revendications 9 à 11, **caractérisé en ce qu'**un recyclage des gaz d'échappement (6) renvoie des gaz d'échappement depuis le côté aval du moteur à combustion interne (1) dans l'admission d'air (7).
